# EUROPEAN PATENT APPLICATION

(11) **EP 4 489 267 A1**
(43) Date of publication of application: **08.01.2025**
(21) Application number: 23183629.7
(22) Date of filing: 05.07.2023
(51) Int. Cl.: H02K 3/52, H02K 7/00, H02K 11/042, H02K 19/12

(54) **A METHOD FOR ATTACHING A BUSBAR TO A ROTOR WINDING OF A ROTOR**

(71) Applicant: Polestar Performance AB, 405 31 Gothenburg (SE)
(72) Inventor: STENVALL, Lars, 459 93 Ljungskile (SE); EHN, Joakim, 461 98 Trollhättan (SE)
(74) Representative: Zacco Sweden AB

(57) **Abstract**

The present disclosure relates to a method (100) for attaching at least a first busbar of a transmitting arrangement of an electric motor to a rotor winding of a rotor of said electric motor to enable DC power to be supplied from said transmitting arrangement to said rotor winding, the method (100) comprising the step of releasably attaching (110) a first end portion of said at least first busbar to a conductor element of said rotor winding. The disclosure further relates to a rotor (50) comprising a first busbar (30) having a first end portion (30a) releasably attached to a conductor element (21) of said rotor winding (20).

## Description

### TECHNICAL FIELD

The present disclosure relates to a method for attaching at least a first busbar of a transmitting arrangement of an electric motor to a rotor winding of a rotor. The disclosure further relates to a rotor.

### BACKGROUND

In an electric vehicle the rotor and stator are key components of the electric motor that drives the vehicle's wheels.

Permanent magnets used in rotors are not considered environmentally friendly for several reasons. First, the production of permanent magnets involves mining and refining of rare earth elements, which can cause environmental degradation and pollution. Also, permanent magnets can pose challenges in recycling and disposal, as they contain hazardous materials that can potentially harm the environment if not handled properly. Therefore, while permanent magnets have many technological benefits, their production and use can have negative environmental implications that need to be carefully managed.

Based on the above, electrically excited rotors using windings around the rotor core are considered to be more environmental friendly compared to permanent magnet rotors. However, when using an electrically excited rotor, the winding on the rotor receives direct current (DC) power. Hence, the winding needs to be connected to a busbar that transmits the DC power from a power source to the winding thereby electrically exciting the winding to create a magnetic field.

Properly connecting a rotor winding to a busbar for DC power is crucial for efficient and reliable operation of an electrical machine. The correct connection ensures that the generated DC power is efficiently transmitted to the rotor, enabling optimal performance and torque production. Additionally, a secure and well-connected busbar minimizes the risk of power loss, overheating, and potential damage to the winding, promoting overall system safety and longevity. The winding-to-busbar connections of the present art are usually inconvenient to manufacture and/or fail to withstand centrifugal powers arising by rotation of the rotor.

Thus, there is room for electrically excited rotors in the present art to explore the domain of providing an electrically excited rotor with a winding-to-busbar connection that is able to withstand centrifugal powers and/or that is convenient to manufacture. Hence, there is room for a winding-to-busbar connection that, while being more convenient to manufacture, is also more durable than winding-to-busbar connections of previous solutions.

Even though previous solutions may work well in some situations, it would be desirable to provide a method and a rotor that comprises a winding-to-busbar connection that address requirements related to improving a manufacturing convenience and/or durability.

### SUMMARY

It is therefore an object of the present disclosure to alleviate at least some of the mentioned drawbacks to provide a method for attaching at least a first busbar of a transmitting arrangement of an electric motor to a rotor winding that improves the rotor in durability and manufacturing convenience. Further, the disclosure provides a rotor and an electric vehicle comprising such a rotor. This object is achieved by means of a method as defined in the appended claims. The present disclosure is at least partly based on the insight that by providing a method for attaching a busbar in a releasable manner to a conductor element of a rotor winding, the rotor will be more convenient to manufacture and have increased durability (based on the fact that it is securely attached while also being more convenient to maintenance).

The present disclosure relates to a method for attaching at least a first (rectifier) busbar (and in some aspects a first and a second) of a transmitting arrangement of an electric motor to a rotor winding of a rotor of said electric motor to enable direct current (DC) power to be supplied from said transmitting arrangement to said rotor winding, The method comprises the step of releasably attaching a first end portion of said at least first (rectifier) busbar to a conductor element of said rotor winding. The expression "busbar" herein may within the context herein refer to any busbar arranged to transfer DC power to said rotor winding from e.g., a power source of an electric vehicle. In some aspects herein the expression "busbar" refers to a rectifier busbar. Hence, expression "busbar" may be interchanged with "rectifier busbar".

An advantage of the method is that, by releasably attaching the busbar to the conductor element, the connection will be more convenient to manufacture and to maintenance.

Releasably attaching may comprise/refer to mechanically attaching said first end portion to said conductor element. By mechanically attaching the end portion to the conductor element, the manufacturing is further improved in convenience as there is no need for expensive and bulky tools (such as a welding machine) to attach the conductor element to the first end portion of the busbar.

Mechanically attaching may exclude the use of heat, adhesive and fasteners, fasteners comprising screws, nuts, bolts, washers, clamps and rivets.

Releasably attaching may comprise binding/lacing/twisting said conductor element to said first end portion of said at least first busbar, or vice versa. In other words, releasably attaching may comprise to bind said conductor element to said first busbar to attach the conductor element to the first busbar.

An advantage of binding the conductor element to said busbar is that provides manufacturing convenience as it requires no expensive tools.

Binding may comprise the step of encircling/swirling said conductor element around a first part of said first end portion (or vice versa). Hence, the encircling may be performed for one turn, or a plurality of turns e.g. two, or more than two such as 3-12 or 5-12. Each turn may be defined by a circling of 360 degrees around said first end portion and/or when forming a full circle. When binded, part of the conductor element may be binded to form a helix/spiral shape enclosing a first part of the first end portion.

An advantage of providing encircling is that is convenient while providing a secure connection.

After the step of binding, a second part of said first end portion may be protruding from inside the encircled conductor element. Then, the method may comprise the step of folding said second part over said encircled conductor element. Folding may refer to that the second part abuts the part of the conductor element being encircled. Further, when folded the first part and the second part may be parallel.

An advantage of folding the second part of the first end portion subsequent to the step of binding is that it further secures the connection of the busbar to the conductor without increasing any manufacturing convenience.

The first end portion may be, when at an installed state, adjacent (or abutting) a base of said rotor. The method may then further comprise assembling a retention disc to said base of a shaft of said rotor so to position the first end portion intermediate said retention disc and said base (in a direction along an axial extension of said rotor), thereby securing said attached first end portion in said axial direction/axially towards said shaft.

The retention disc advantageously prevents centrifugal forces provided by the rotor during rotation to separate the busbar from the conductor.

In some aspects herein the retention disc may be arranged to electrically isolate said busbar from external components. External components may be referring to components coupled to the rotor or associated to the rotor such as wires, cables, bearings etc. Hence, the retention disc may enclose the busbar to electrically isolate the busbar from components external of the retention disc.

The first busbar may protrude out from an interior of said rotor shaft, preferably from a base of said rotor shaft, wherein the rotor shaft is a hollow rotor shaft. Hence, the rectifier circuitry may be enclosed in said rotor shaft such that a pair of (rectifier) busbars protrude out from an opening within said rotor shaft. Accordingly, a transmitting arrangement may be arranged at least partially within the rotor shaft. The transmitting arrangement may comprise said rectifier circuitry. Further, the transmitting arrangement may comprise means to receive, inductively/contactless, AC power from a power source which is further rectified by said rectifier circuitry and subsequently transmitted to the rotor winding. The rectifier may comprise two terminals (positive, + and negative, - terminals) each being connected to a corresponding (rectifier) busbar (first and a second) to transmit said DC power to the rotor winding. In other words, to enable flow of DC between the rectifier circuitry and the rotor winding. Hence, the first busbar and second busbars may be connected at respective end portions thereof to the rotor winding in a manner that enables a magnetic field to be generated as a response to DC power being supplied to the rotor winding from the rectifier circuitry.

It should be appreciated that, in aspects in which the rotor winding is serially connected/comprises a series configuration (e.g. comprising a plurality of serially connected coils) the rectifier may comprise two busbars. However, in other aspects in which the winding comprises parallel connected coils forming a parallel configuration, then the rectifier may comprise more than two busbars. As an example, if the winding comprises six coils forming parallel configuration, then the rectifier may comprise six busbars. Hence, the number of busbars from the rectifier circuitry may be varied depending on the type of coil configuration employed at the winding of the rotor.

The present disclosure also relates to a rotor for an electric motor, the rotor being arranged to be accommodated by a stator of said electric motor, the rotor comprising a rotor shaft, an annular rotor core enclosing said rotor shaft, a rotor winding circumferentially arranged around said rotor core, a transmitting arrangement arranged to supply DC power to said rotor winding, the transmitting arrangement comprising at least a first busbar. Further, a first end portion of the first busbar is releasably attached to a conductor element of said rotor winding.

The mentioned features and advantages as disclosed with regards to any aspect of the method of the present disclosure also apply to the electric motor herein. In order to avoid undue repetition, reference is made to the above.

The first busbar may be releasably attached to said conductor element by that a first end portion of said busbar is binded to said conductor element.

Further, binded is defined by said conductor element encircling said busbar around a first part of said first end portion.

Binded may further be defined by that a second part of said first end portion is folded over said encircled conductor element.

The first end portion of said busbar may be positioned adjacent a base of said rotor shaft, wherein said rotor further comprises an retention disc attached to said base to prevent axial movement of said first end portion, wherein the first end portion is intermediate said retention disc and said base.

The transmitting arrangement may comprise a transformer unit arranged to receive (inductively) AC power from a power source and a rectifier circuitry arranged to receive said alternating current (AC) power from said transformer unit and rectify said AC power to DC power. The at least first (rectifier) busbar is attached at one end to said rectifier circuitry and at another end (part of the first end portion) to said rotor winding.

The rotor shaft may be a hollow rotor shaft, wherein said rectifier circuitry and at least a part of said transformer unit are arranged within an interior space of said hollow rotor shaft.

The disclosed aspects may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

### BRIEF DESCRIPTION OF THE DRAWINGS

These and other features and advantages of the present disclosure will now be further clarified and described in more detail, with reference to the appended drawings;
- Figure 1: illustrates a method in the form of a schematic flowchart in accordance with aspects herein;
- Figure 2: illustrates a method in the form of an illustrative flowchart in accordance with aspects herein;
- Figure 3: illustrates an electric motor for a vehicle from an objective view in accordance with aspects herein;
- Figure 4A-B: illustrates an electric motor having a retention disc from an objective view in accordance with aspects herein;
- Figure 5: illustrates a busbar from a front view in accordance with aspects herein; and
- Figure 6: illustrates an electric vehicle schematically from a side in accordance with aspects herein;

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

The term "rotor" herein may refer to an electrically excited rotor. An electrically excited rotor being a rotor that is magnetized by an external electrical source. Preferably, DC power received from a rectifier circuitry.

The term "busbar" herein may refer to a rigid conductor, e.g. a metallic bar, arranged to carry electric power. The busbar may be formed by e.g. copper.

The term "transmitting arrangement" may refer to an arrangement arranged to transmit DC power to the rotor winding. In some aspects the transmitting arrangement may refer to a transformer arrangement arranged to contactless/inductively receive AC power from battery modules of an electric vehicle, rectify said AC power to DC power in a rectifying circuitry thereof and transfer said DC power to said rotor winding.

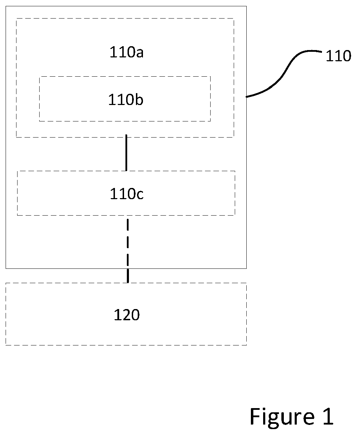

Figure 1 schematically illustrates in the form of a flowchart, a method for 100 for attaching at least a first busbar of a transmitting arrangement of an electric motor to a rotor winding of a rotor of said electric motor to enable DC power to be supplied from said transmitting arrangement to said rotor winding, the method comprising the step of releasably 110 attaching a first end portion of said at least first busbar to a conductor element of said rotor winding. The expression "conductor element" herein may be interchanged with "a part of said winding" i.e. a first end portion of said at least first busbar may be attached to a part of said rotor winding, preferably an end of said rotor winding. Hence, a pair of busbars may in some aspects be attached between opposing ends of said winding if said winding is serially configured.

The transmitting arrangement may comprise a first and a second rectifier busbar which may both be attached to respective parts of a rotor winding for enabling DC power to be supplied to the rotor winding to create a magnetic field when the electrical current flows through the rotor winding thereby, when said magnetic field interacts with the stator, the rotor will rotate relative the stator.

As illustrated in Figure 1, the step of releasably attaching 110 may comprise binding 110a said conductor element to said first end portion of said at least first busbar. Further, as illustrated in Figure 1, binding 110a may comprise encircling 110b said conductor element around a first part of said first end portion. The step of releasably attaching 110 may further comprise the step of folding 110c a second part of said first end portion over said encircled conductor element 110b. Accordingly, method steps 110a, 110b, 110c may be substeps part of method step 110.

As illustrated in Figure 1, the method 120 may further comprise the step of assembling 120 a retention disc to said base of a shaft of said rotor so to position the first end portion intermediate said retention disc and said base, thereby securing said attached first end portion axially towards said shaft.

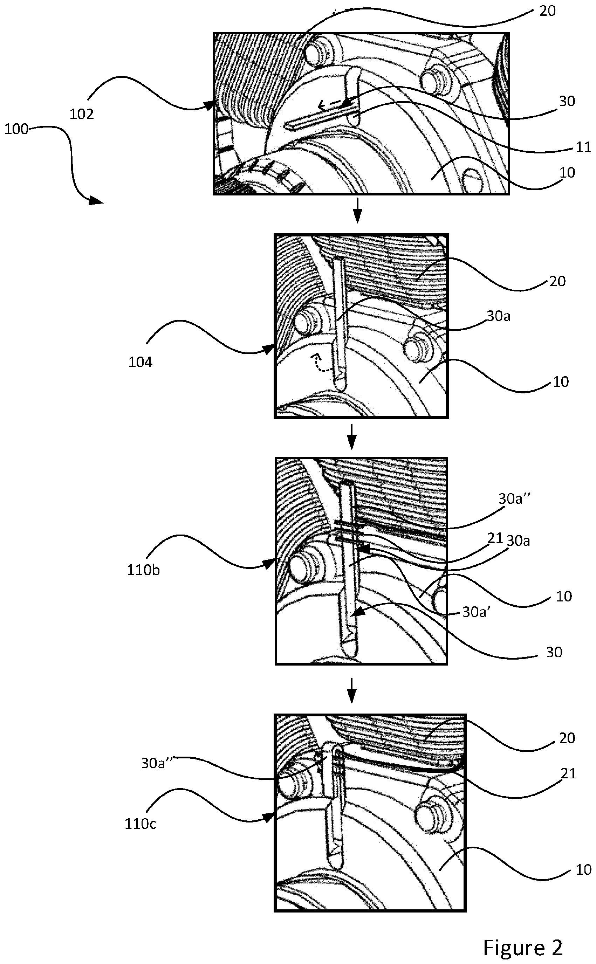

Figure 2 illustrates a method 100 for attaching at least a first busbar 30 of a transmitting arrangement of an electric motor to a rotor winding 20 of a rotor of said electric motor to enable DC power to be supplied from said transmitting arrangement to said rotor winding in accordance with some aspects of the present disclosure. Figure 2 illustrates a method 100 in which the transmitting arrangement is at least partly (at least the rectifier may be) located (not shown) within the rotor shaft 10, in other words, the rotor shaft 10 may be a hollow rotor shaft 10. Further, Figure 2 schematically illustrates a cut-out of an objective view of a rotor.

Figure 2 illustrates that the method 100, if the rotor shaft 10 is a hollow rotor shaft arranged to enclose the transmitting arrangement, may comprise the step of threading/driving/pushing 102 the at least first busbar 30 (from an interior of the rotor 10) through an opening 11 of said hollow rotor shaft 10 so that the first end portion 30a of the first busbar 30 protrudes out from said rotor shaft 10. It should be noted that this may be performed also for a second busbar (not shown), then there may be another corresponding opening (not shown) at said shaft 10 for threading the second busbar out from said another opening.

Further, as illustrated in Figure 2, the method 100 may also comprise the step of directing 104 the protruding par/bending 104 the protruding part (first end portion 30a) of said first busbar 30 towards the rotor winding 20. The first busbar 30 may be bent so that it extends essentially perpendicular to an axial extension of said rotor shaft 10 as shown in method step 104 illustrated in Figure 2.

It should be noted that the method 100 in some aspects is performed at a rotor shaft 20 which is solid.

Figure 2 further illustrates that the method 100 may comprise the step of encircling 110b a conductor element 21 of the winding 20 around a first part 30a' of said first end portion 30a. The conductor element 21 may be a wire of the winding, specifically a part of the wire comprising the end of the winding. The first part 30a' of said first end porton 30a may be a part of said end portion 30a not being associated to an end of said first busbar 30 as illustrated in Figure 2 (at method step 110b). Hence, a second part 30a" may comprise an end of said first busbar 30. Accordingly, this allows for said second part 30a" to be free from said conductor element 21 after the step of encircling 110b.

Accordingly, as illustrated in Figure 2, the method 100 may comprise the step of, after encircling 110b, folding 110c the second part 30a" of said first end portion 30a over said encircled conductor element 21. As illustrated in Figure 2 at step 110c, the second part 30a" of said first end portion 30a may be folded essentially 180 degrees (+- 20 degrees), in other words, the second part 30a" may be folded to partially enclose the encircled part of the conductor element 21. Preferably, the second part 30a" abuts the encircled part of the conductor element 21 as illustrated in Figure 2 at method step 110c. Hence, as illustrated in Figure 2 the conductor element 21 is secured to the first busbar 30. However, as noted herein, the method 100 steps of Figure 2 may be performed in alternative manners. The step of releasably attaching 110 may be performed by binding/lacing 110a said conductor element to said first end portion of said at least first busbar in other suitable manners within the context of the present disclosure.

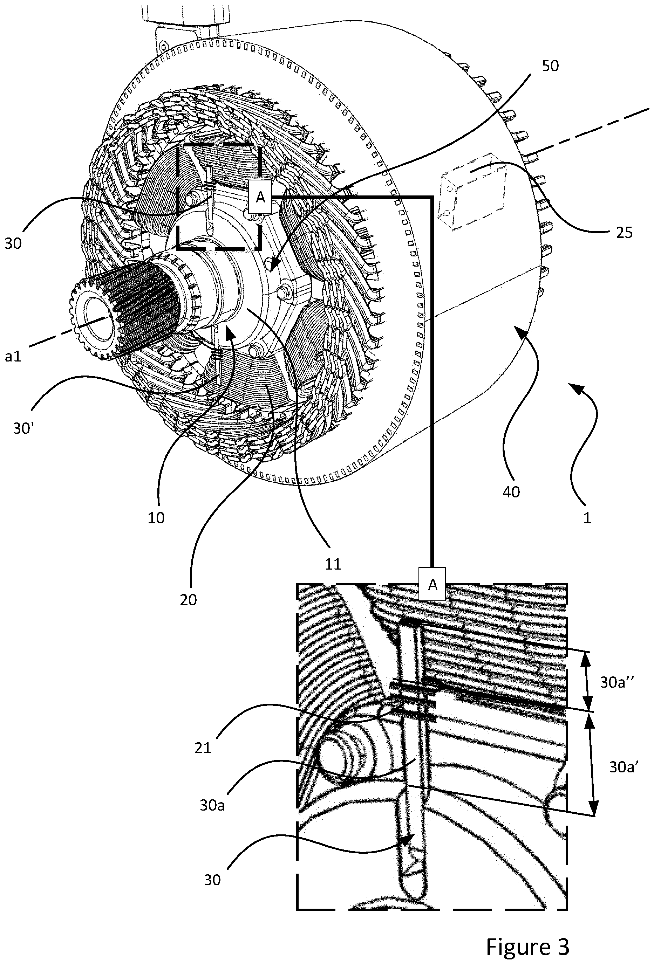

Figure 3 illustrates an electric motor 1 from an objective view in accordance with some aspects herein. The electric motor 1 comprises a rotor 50 being accommodated by a stator 40 (comprising stator windings at an inner cirfumference thereof) of said electric motor 1, the rotor 50 comprising, a rotor shaft 10, an annular rotor core enclosing said rotor shaft 10, a rotor winding 20 circumferentially arranged around said rotor core and a transmitting arrangement 25 arranged to supply DC power to said rotor winding 20, the transmitting arrangement 25 comprising at least a first (rectifier) busbar 30. Hence, when connected, the first 30 (and a second 30') busbar may at one end be connected to the transmitting arrangement 25 (specifically a rectifier circuitry thereof) and at an opposing first end portion 30a releasably attached to a conductor element 21 of said rotor winding 20. Figure 3 schematically illustrates that the transmitting arrangement 25 may be at least partly located at an interior of the rotor 50.

As illustrated in Figure 3 the first busbars first end portion 30a may protrude out from a base 11 of the rotor shaft 10. A plane (not shown) of the base 11 may, as shown in Figure 3, be perpendicular or substantially perpendicular to an axial extension a1 of said rotor shaft 10. Generally, the rotor shaft 10 may be formed as a cylindrical unit with opposing bases and an output shaft connected to or integral with the bases. Further, as illustrated in Figure 3, the first and second busbar 30, 30' may be arranged/protrude diametrically opposite relative each other about a circular perimeter at said base.

Figure 3 further contains an enlarged section A of the motor 1 which illustrates the conductor 21 tied/binded to the busbar 30. As illustrates in Figure 3, the busbar 30 may extend in a direction substantially perpendicular to the axial axis a1. The busbar 30 may be arranged to be bended towards the windings 20 of the rotor 50. In Figure 3, the conductor 21 is encircled around the first part 30a' of the first end portion 30a of the busbar 30. However, as illustrated in Figure 2, the second part 30a" may be folded over the first part 30a'.

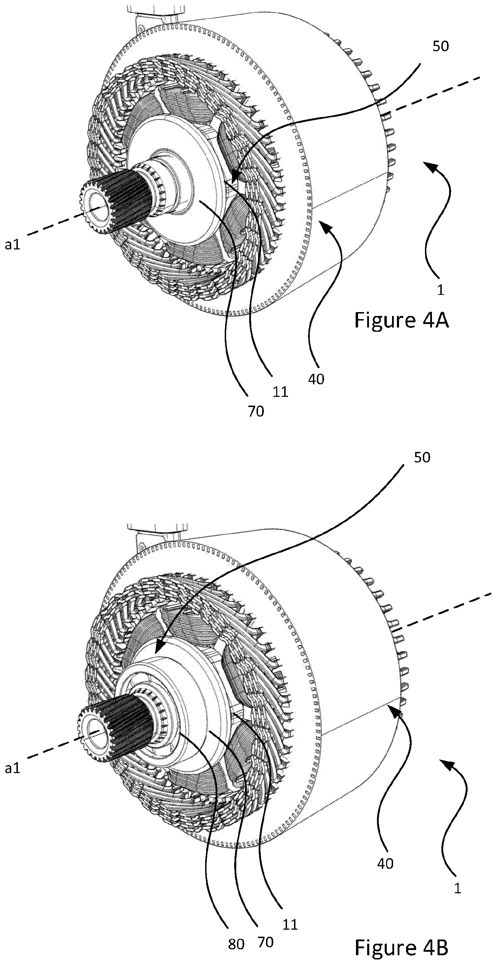

Figure 4A-B illustrates an objective view of an electric motor 1 comprising a stator 40 enclosing a rotor 50. Figure 4A illustrates that the rotor 50 may comprise a retention disc 70 attached to said base 11 to prevent/reduce axial movement along the axial axis a1 of said first end portion 30a (not seen in Figure 4), wherein the first end portion is intermediate said retention disc 70 and said base 11. The retention disc 70 may be arranged to electrically isolate said busbar 30 from external components. External components may be e.g. the bearing 80 as shown in Figure 4B.

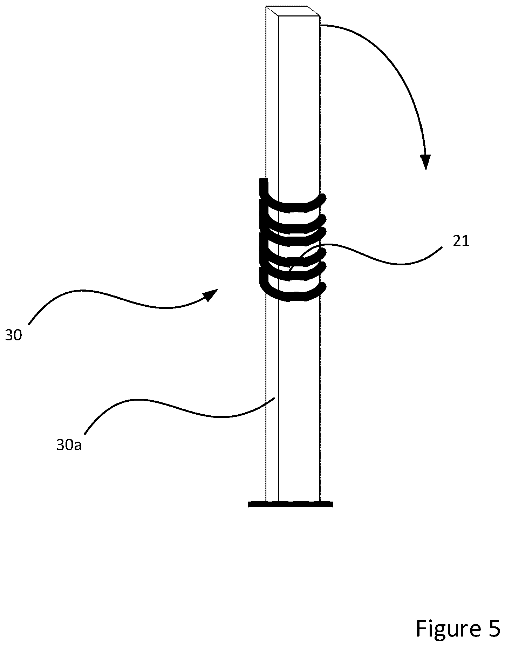

Figure 5 illustrates a front view of a first end portion 30a of a busbar 30 in which a conductor element 21 is encircled around said busbar 30 a plurality of turns. The conductor element may be formed by any suitable conductive material, preferably copper.

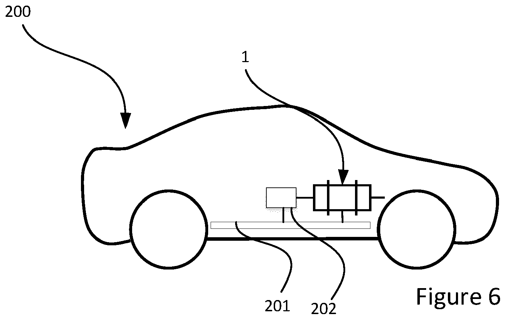

Figure 6 illustrates an electric vehicle 200 comprising an electric motor 1 in accordance with some aspects herein. The electric vehicle 200 of Figure 6 is illustrated from a schematical side view. The electric vehicle 200 may comprises a battery module 201, an inverter, a number of other electrical components including an electrical current transmission system, safety system, battery management system, current management system, and a battery busbar interconnecting the various components. Further, the electric vehicle 200 may comprise an electronic control unit (ECU) 202 in order to control the electric motor 100 or cooling thereof. The ECU 202 or components thereof can comprise or include various modules, each of which is constructed, programmed, configured, or otherwise adapted to autonomously carry out a function or set of functions.

## Claims

1. A method (100) for attaching at least a first busbar of a transmitting arrangement of an electric motor to a rotor winding of a rotor of said electric motor to enable DC power to be supplied from said transmitting arrangement to said rotor winding, the method comprising:
- releasably attaching (110) a first end portion of said at least first busbar to a conductor element of said rotor winding.

2. The method (100) according to claim 1, wherein the step of releasably attaching comprises mechanically attaching said first end portion to said conductor element.

3. The method (100) according to any one of the claims 1 or 2, wherein mechanical attaching excludes the use of heat, adhesive and fasteners, fasteners comprising screws, nuts, bolts, clamps, washers and rivets.

4. The method (100) according to any one of the preceding claims, wherein releasably attaching (110) comprises binding (110a) said conductor element to said first end portion of said at least first busbar.

5. The method (100) according to claim 4, wherein binding comprises
- encircling (110b) said conductor element around a first part of said first end portion.

6. The method (100) according to claim 5, further comprising, after encircling:
- folding (110c) a second part of said first end portion over said encircled conductor element.

7. The method (100) according to any one of the preceding claims, wherein the first end portion is adjacent a base of said rotor, wherein the method further comprises:
- assembling (120) a retention disc to said base of a shaft of said rotor so to position the first end portion intermediate said retention disc and said base, thereby securing said attached first end portion axially towards said shaft.

8. The method (100) according to any one of the preceding claims, wherein said first busbar protrudes out from an interior of said rotor shaft, preferably from a base of said rotor shaft, wherein the rotor shaft is a hollow rotor shaft.

9. A rotor (50) for an electric motor (1), the rotor (50) being arranged to be accommodated by a stator (40) of said electric motor (1), the rotor (50) comprising:
- a rotor shaft (10);
- an annular rotor core enclosing said rotor shaft (10);
- a rotor winding (20) circumferentially arranged around said rotor core;
- a transmitting arrangement (25) arranged to supply DC power to said rotor winding, the transmitting arrangement (25) comprising at least a first busbar (30);
wherein a first end portion (30a) of the first busbar (30) is releasably attached to a conductor element (21) of said rotor winding.

10. The rotor (50) according to claim 9, wherein said first busbar (30) is releasably attached to said conductor element (21) by that a first end portion (30a) of said busbar (30) is binded to said conductor element (21).

11. The rotor (50) according to any one of the claims 9 or 10, wherein binded is defined by said conductor element (21) encircling said first busbar (30) around a first part (30a')of said first end portion (30a).

12. The rotor (50) according to claim 11, wherein binded is further defined by that a second part (30a") of said first end portion (30a) is folded over said encircled conductor element (21).

13. The rotor (50) according to any one of the claims 9-12, wherein said first end portion (30a) of said first busbar (30) is positioned adjacent a base (11) of said rotor shaft (10), wherein said rotor (50) further comprises a retention disc (70) attached to said base (11) to prevent axial movement of said first end portion (30a), wherein the first end portion (30a) is intermediate said retention disc (70) and said base (11).

14. The rotor (50) according to any one of the claims 9-13, wherein said rotor shaft (10) is a hollow rotor shaft (10), wherein said rectifier circuitry and at least a part of said transformer unit are arranged within an interior space of said hollow rotor shaft (10).

15. An electric vehicle (200) comprising an electric motor (1) arranged to power the propulsion of said electric vehicle (200), the electric motor (1) comprising a stator (40), and a rotor (50) according to any one of the claims 9-14, wherein said stator (40) encloses said rotor (50).
